# EUROPEAN PATENT APPLICATION

(11) **EP 1 416 569 A2**
(43) Date of publication of application: **06.05.2004**
(21) Application number: 03076660.4
(22) Date of filing: 28.05.2003
(51) Int. Cl.: H01M 8/24

(54) **Passive gas spring for solid-oxide fuell cell stack loading**

(30) Priority: 24.06.2002 US 391028 P; 13.03.2003 US 388129
(71) Applicant: Delphi Technologies, Inc., Troy, MI 48007 (US)
(72) Inventor: Simpkins, Haskell, Grand Blanc, MI 48439 (US); Haltiner, Jr., Karl Jacob, Fairport, NY 14450 (US); Richardson, Curtis A., Voorheesville, NY 12186 (US)
(74) Representative: Denton, Michael John

(57) **Abstract**

A passive gas spring disposed within a fuel cell assembly adjacent a fuel cell stack for maintaining the stack under compression at elevated temperatures. The spring includes at least one membrane formed of a metal alloy stable at the operating temperatures required of the fuel cell assembly. The membrane closes a chamber for retaining an amount of gas. As temperature of the assembly changes, differential thermal expansion of fuel cell components and supporting structural elements can cause height mismatches between the stack and the supporting structure, otherwise resulting in a loss of compression in the assembly. Because the temperature of the gas also increases, however, the spring force of the gas spring increases, thereby maintaining compressive load on the various assembly seals. A mechanical spring may also be provided.

## Description

### TECHNICAL FIELD

The present invention relates to hydrogen/oxygen fuel cells; more particularly, to fuel cell stacks comprising a plurality of individual fuel cell modules; and most particularly, to a method and apparatus for applying a compressive load to a fuel cell stack assembly and supply manifold during manufacture and for maintaining a compressive load thereupon during use.

### BACKGROUND OF THE INVENTION

Fuel cells which generate electric current by controllably combining elemental hydrogen and oxygen are well known. In one form of such a fuel cell, an anodic layer and a cathodic layer are deposited on opposite surfaces of a permeable electrolyte formed of a ceramic solid oxide. Such a fuel cell is known in the art as a "solid oxide fuel cell" (SOFC). Hydrogen, either pure or reformed from hydrocarbons, is flowed along the outer surface of the anode and diffuses into the anode. Oxygen, typically from air, is flowed along the outer surface of the cathode and diffuses into the cathode where it is ionized. The oxygen ions diffuse through the electrolyte and combine with hydrogen ions to form water. The cathode and the anode are connected externally through the load to complete the circuit whereby electrons are transferred from the anode to the cathode. When hydrogen is derived from "reformed" hydrocarbons, the reformate gas includes CO which is converted to CO₂ at the anode. Reformed gasoline is a commonly used fuel in automotive fuel cell applications.

A single cell is capable of generating a relatively small voltage and wattage, typically between about 0.5 volt and about 1.0 volt, depending upon electrical load, and less than about 2 watts per cm² of cell surface Therefore, in practice it is usual to stack together, in electrical series, a plurality of cells. Because each anode and cathode must have a free space for passage of gas over its surface, the cells are separated by perimeter spacers which are vented to permit flow of gas to the anodes and cathodes as desired but which form seals on their axial surfaces to prevent gas leakage from the sides of the stack. The perimeter spacers include dielectric layers to insulate the interconnects from each other. Adjacent cells are connected electrically by "interconnect" elements in the stack, the outer surfaces of the anodes and cathodes being electrically connected to their respective interconnects by electrical contacts disposed within the gas-flow space, typically by a metallic foam which is readily gas-permeable or by conductive filaments. The outermost, or end, interconnects of the stack define electric terminals, or "current collectors," which may be connected across a load.

A complete SOFC assembly typically includes auxiliary subsystems for, among other requirements, generating fuel by reforming hydrocarbons; tempering the reformate fuel and air entering the stack; providing air to the hydrocarbon reformer; providing air to the cathodes for reaction with hydrogen in the fuel cell stack; providing air for cooling the fuel cell stack; providing combustion air to an afterburner for unspent fuel exiting the stack; and providing cooling air to the afterburner and the stack. These various subsystems typically are mated via mounting to an integrating manifold. A complete SOFC assembly also includes appropriate piping and valving, as well as a programmable electronic control unit (ECU) for managing the activities of the subsystems simultaneously.

During assembly of a fuel cell stack, a compressive load must be maintained during high-temperature sintering of the stack assembly seals. Further, a compressive load must also be maintained after the sintering process to ensure the integrity of the glass seals to the manifold during assembly and also afterwards during use of the finished fuel cell assembly.

The stack assembly is made from a variety of metallic and non-metallic materials, and the supporting structure fastening the stack to its manifold is constructed of, typically, a bolting material capable of withstanding high temperatures. At operating temperature, typically around 800°C, thermal growth of the stack does not match thermal growth of the bolting material because of differences in thermal expansion coefficients, which mismatch can result in loss of compressive load against the various seals.

To compensate for this mismatch, it is known to use mechanical springs within the assembly. However, high operating temperatures can affect temper of spring materials, resulting in load failure. Further, spring constants typically diminish with increase in temperature, conditions under which an increase in spring force is desirable to compensate for increasing mismatch.

Another known approach is to carefully select the materials in the mounting mechanism to match the thermal characteristics of the stack. However, slight mismatches still can result in loss of compression or lateral shear between adjacent surfaces; also, this approach can undesirably limit the choice of materials and their combinations.

Further, a fuel cell assembly may comprise a plurality of fuel cell stacks disposed side-by-side within a single supporting structure, and different stacks may vary in height at different temperatures.

What is needed is a means for providing a compressive load to a fuel cell assembly at ambient and elevated temperatures to compensate for mismatches in the heights of multiple stacks and for the difference in thermal expansion between the stacks and the supporting structure.

It is a principal object of the present invention to compress a fuel cell assembly automatically under all required temperature conditions during manufacture.

It is a further object of the present invention to compress a fuel cell assembly automatically under all temperature conditions of use.

### BRIEF DESCRIPTION OF THE INVENTION

Briefly described, in a fuel cell assembly comprising one or more fuel cell stacks and a supporting structure, a passive gas spring is disposed between the stacks and the supporting structure for maintaining compressive force on the stack and manifold seals. The spring includes a membrane formed of a metal alloy stable at the operating temperatures required of the fuel cell assembly. In one embodiment, the membrane is attached along a first edge to the fuel cell stacks and along a second edge to the supporting structure to form a closed chamber for retaining an amount of gas. As variation in temperature of the assembly and structure causes dimensional changes therein, the pressure within the gas spring also changes accordingly, thereby automatically maintaining a compressive load on the fuel cell stack over the full range of temperature variation, and in fact desirably increasing the load as temperature increases, unlike the prior art mechanical spring.

In a currently preferred embodiment of a gas pillow for inclusion in a fuel cell assembly, a closed frame element is formed having a trough shape that provides great resistance to radial expansion. Upper and lower metal membranes are laser-welded to the frame element to define a gas-filled space therebetween. Other configurations for capturing a gas-filled space are also comprehended by the invention, including one having a mechanical spring coupled within a gas spring.

As the temperature of the gas spring increases, the axial pressure exerted on the membranes by the captured gas, and therefore on the fuel cell stack, also increases in accordance with Boyle's Law. Thus, as height mismatches occur between the stacks and the supporting structure, the gas spring increases in force to maintain compressive load on the various assembly seals. It is especially beneficial that thermal expansion of the stack components and the gas are both thermally linear.

An advantage of the present invention is that the load applied by the gas spring is uniform over the operating area of the gas spring; thus, there are no high load concentrations against the fuel cell elements.

Another advantage of the present invention is that any desired load pattern may be provided simply by manipulating the areal shape of the gas pillow.

### BRIEF DESCRIPTION OF THE DRAWINGS

These and other features and advantages of the invention will be more fully understood and appreciated from the following description of certain exemplary embodiments of the invention taken together with the accompanying drawings, in which:
FIG. 1 is an elevational cross-sectional view of a prior art SOFC assembly, showing a mechanical spring for maintaining compression of the assembly;
FIG. 2 is an elevational cross-sectional view of a portion of a first embodiment of a gas spring having an inward concave frame element in accordance with the invention;
FIG. 2a is the same view as FIG. 2, having an outward concave frame element;
FIG. 2b is an elevational cross-sectional view of a portion of a second embodiment of a gas spring in accordance with the invention;
FIG. 2c is an elevational cross-sectional view of a portion of a third embodiment of a gas spring in accordance with the invention;
FIG. 3 is an elevational cross-sectional view of an SOFC assembly like that shown in FIG. 1 but incorporating a first embodiment gas spring like that shown in FIG. 2;
FIG. 4 is an elevational cross-sectional view of an SOFC assembly like that shown in FIG. 3 but incorporating a fourth embodiment of gas spring; and
FIG. 5 is an elevational cross-sectional view of an SOFC assembly incorporating gas spring at the bottom of the fuel cell stack.

### DESCRIPTION OF THE PREFERRED EMBODIMENTS

The features and benefits of the present invention will be more fully understood by first considering a prior art fuel cell assembly utilizing a mechanical spring.

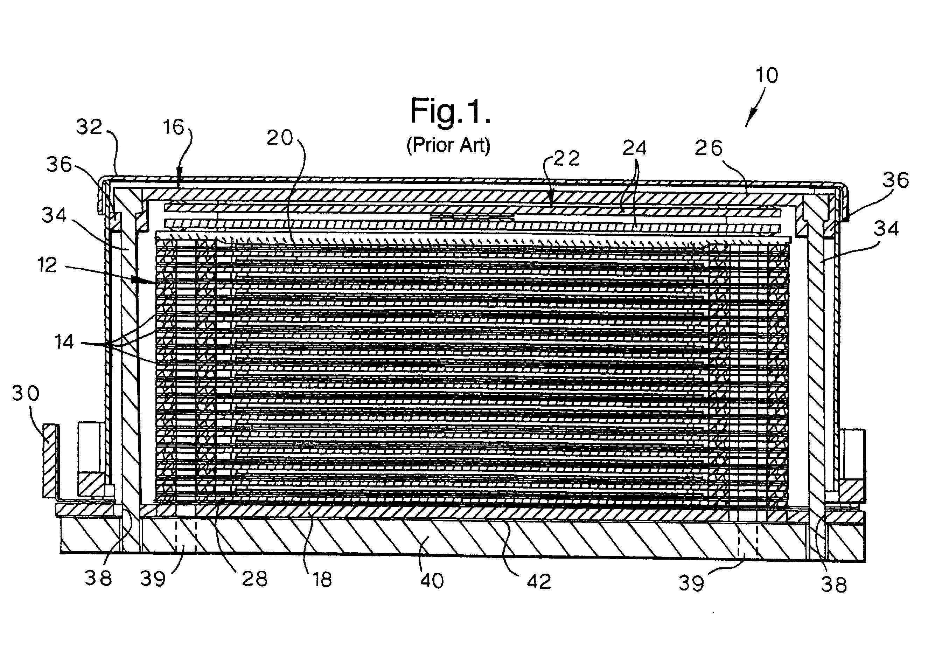

Referring to FIG. 1, a prior art fuel cell assembly 10 includes a fuel cell stack 12 comprising a plurality of individual fuel cell modules 14. Surrounding stack 12 is a supporting structure or load frame 16 comprising a base plate 18; a spring holder 20 for transferring spring force to stack 12; a mechanical spring 22 having first and second leaves 24; and a spring retaining plate 26 providing a mechanical stop for spring 20. Also shown in FIG. 1 is a current collector 28, power lead 30, and housing 32.

Bolts 34 extend through ears 36 on retaining plate 26 and through bores 38 in base plate 18 and are threadedly received in supply and exhaust manifold 40. The fuel cell stack, spring, and base plate are thus sandwiched between the retaining plate and the manifold. Tension on the bolts serves to provide compression of the stack, spring, and base plate.

Passageways 39, formed by aligned apertures in supply and exhaust manifold 40, gasket element 42, base plate 18 and stack 12 serve to carry oxygen or hydrogen to active surfaces of fuel cell modules 14 as known in the art. The purpose of spring 20 is to keep the bolts under tension, and thus the stack under compression, at all conditions. Modules 14 are sealed to each other and to current collector 28 by thin glass seals (not visible in FIG. 1). Base plate 18 is sealed to manifold 40 by gasket element 42. For these seals to remain intact at all conditions, and for the integrity of the passageways to be retained, the assembly must be maintained in compression, by maintaining tension on bolts 34.

Mechanical spring 22 is disposed between spring holder 20 and retaining plate 26. Deflection of leaves 24 is intended to provide a continuous compressive load despite differences in thermal growth between stack 12 and load frame 16. Preferably, the entire assembly is held in a jig at predetermined elevated temperature and pressure for a predetermined time to sinter the various seals, and then the bolts are torqued by a predetermined amount to establish the preload on the spring and assembly.

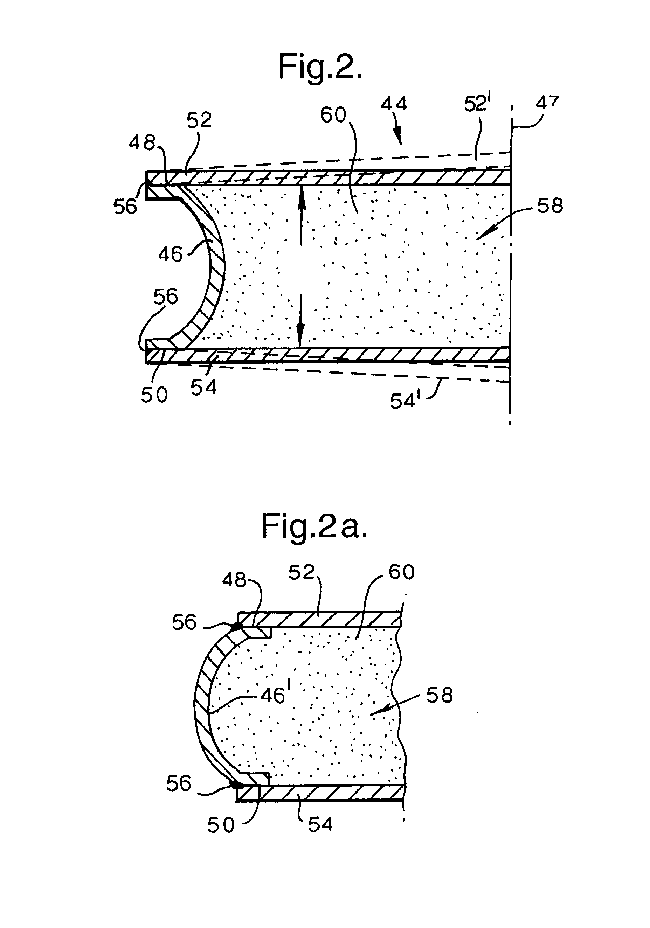

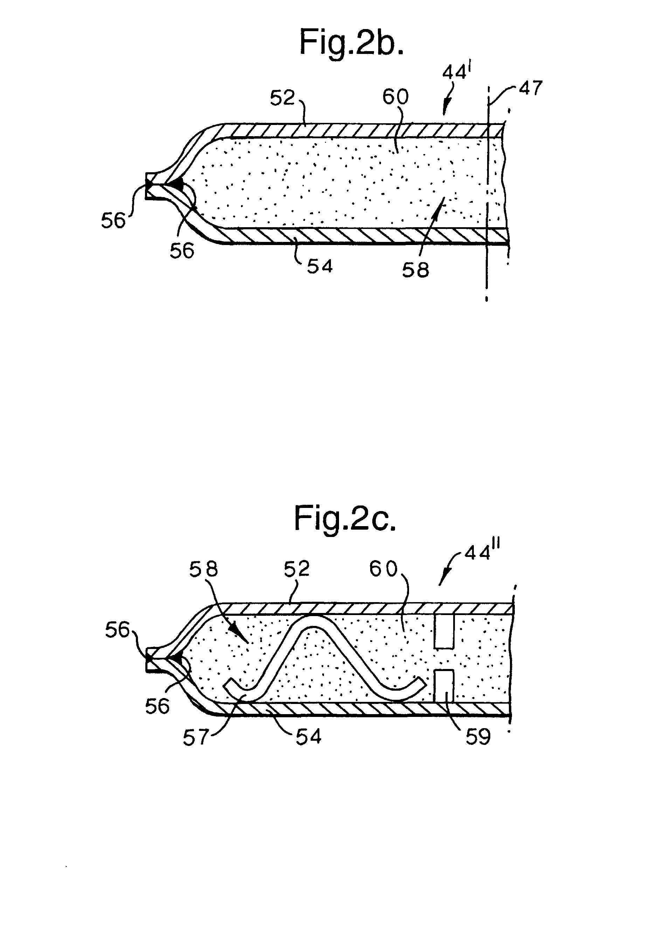

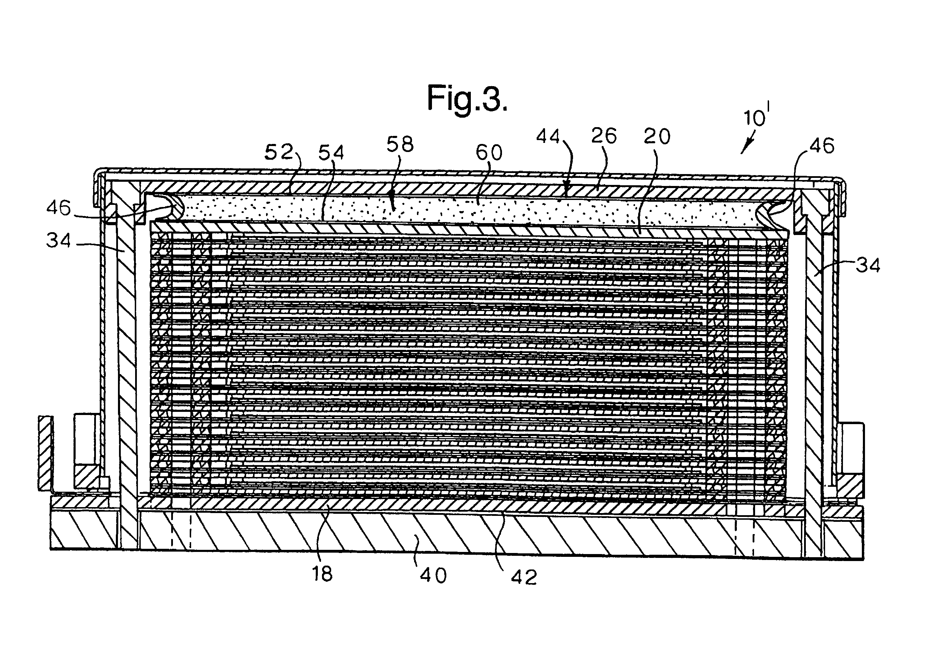

Referring to FIGS. 2 and 3, in accordance with the invention, in improved assembly 10' a novel gas spring 44 is substituted directly for mechanical spring 22. Gas spring 44 comprises a closed frame element 46 having axis 47 and preferably is formed in a trough shape to resist radial deformation under load. Frame element 46,46' may be concave inwards as shown in FIG.2 or outwards as shown in FIG.2a to equal effect. Frame element 46,46' includes first and second axial surfaces 48,50 to which first and second membranes 52,54, respectively, are continuously attached as by laser welding 56 to form a flattened pillow enclosing a chamber 58. Preferably, membranes 52,54 are formed of a flexible high-temperature metal alloy, for example, Haynes 160, 214, 230, 825, or 901; a Hastelloy; or Inconel DS, 625, or 718. Preferably, membranes 52,54 are between about 0.005 inch and 0.010 inch in thickness. Chamber 58 is filled with a gas 60, preferably air, which may be installed in known fashion at any desired pressure above or below atmospheric for any specific application; one atmosphere is currently preferred for fuel cell uses.

As the temperature of captive gas 60 rises, increased outward axial pressure is exerted on element 46 and membranes 52,54 in accordance with Boyle's Law, urging the membranes apart axially as shown by phantom membranes 52',54' in FIG. 2. When installed in assembly 10', membranes 52,54 are restrained by spring holder 20 and spring retaining plate 26. Thus, thermal expansion of gas spring 44 urges spring holder 20 toward base plate 18, keeping stack 12 under compression, and urges retaining plate 26 away from manifold 40, thus keeping bolts 34 under tension and gasket element 42 under compression.

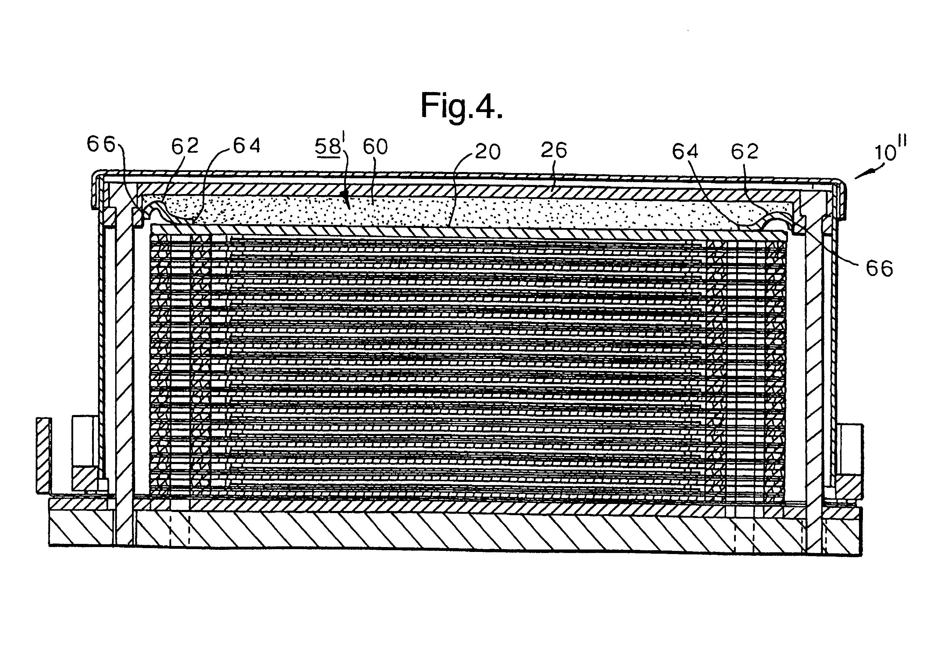

The operative principle of the invention is the use of a captive gas volume to maintain seal compression over a range of temperatures. A volume of gas in accordance with the invention may be captured in a wide variety of structures, all of which are comprehended by the invention. For example, referring to assembly 10" in FIG. 4, in some applications a separate gas spring structure 44 may be omitted and a chamber 58' created simply by flexibly sealing the space between spring holder 20 and spring retaining plate 26. A corrugated, flexible membrane 62 is attached continuously along a first edge 64 to spring holder 20 and along a second edge 66 to spring retaining plate 26 of the fuel cell stack. Thus gas 60 is captured and the spring holder and spring retaining plate are urged away from each other in response to increase in the temperature of gas 60.

Referring to FIG. 2b, a simplified gas spring 44' in accordance with the invention may be formed for use in some applications by omitting frame element 46 from spring 44 and directly sealing membrane 52 to membrane 54 as by laser welds 56 to form a gas-filled pillow.

Referring to FIG. 2c, a combined mechanical - gas spring 44" in accordance with the invention may be formed using mechanical spring 57 enclosed in two-part membrane spring of the type shown in FIG. 2b. In this embodiment, even at lower temperatures when the pressure of gas 60 inside chamber 58 is reduced, forces exerted by mechanical spring 57 outwardly against membranes 52,54 will maintain a compressive load on the fuel cell stack. Optional stop element 59, attached, for example, to the inside surface of membranes 52,54 serves to prevent excessive inward travel of membranes 52,54 under low temperature conditions and over-deflection of spring 57 beyond its yield limit. While FIG. 2c discloses a particular type of spring, any spring means that applies a compressive load to the stacks, used in conjunction with a gas spring, is comprehended by this invention. Also, while FIG. 2c discloses a two-part membrane gas spring used in conjunction with a mechanical spring, it is understood that a mechanical spring can be used in conjunction with any of gas spring embodiments shown in FIGS. 2a, 2b and 4, and be in accordance with this invention. Further, while FIG. 2c discloses the gas and mechanical springs to be functionally in parallel with each other and one set of stops operating for both springs, it is understood that the gas and mechanical springs can be functionally in series with each other, such as by incorporating the mechanical spring outside of chamber 58, and for each spring to have its own set of stops.

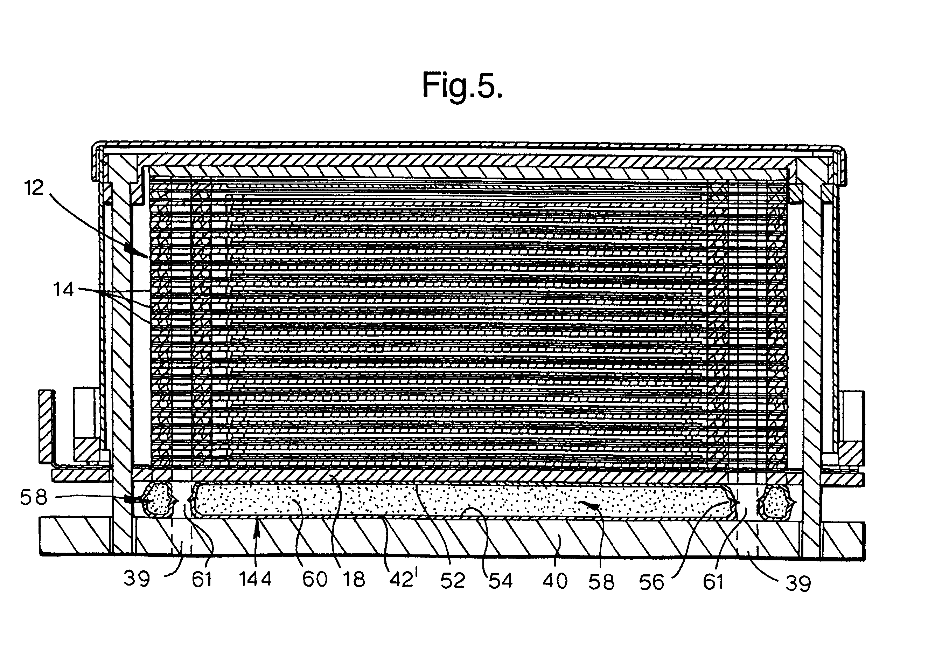

Referring to FIG. 5, yet another embodiment of the current invention is shown wherein a gas spring such as, for example, one of the two part construction shown in FIG. 2b is positioned below the fuel cell stacks rather than above the fuel cell stacks, replacing gasket element 42. In this position, the gas spring provides compensation for both a loss of compression and lateral shear caused by the differing thermal growth of materials.

As shown in FIG. 5, membrane 52 is first sealably joined to membrane 54, such as by laser welding 56. Chamber 58 formed therebetween is filled with gas 60, preferably air, to form a gas spring 144. Apertures 61, formed in edge regions of gas spring 144, align with similarly shaped apertures in supply and exhaust manifold 40, base plate 18, and stack 12, and provide passageways 39 for carrying oxygen and hydrogen to fuel modules 14. By locating gas spring 144 between manifold 40 and base plate 18, spring 144 serves both to add compressive force to the stack and to seal around oxygen or hydrogen passageways 39.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A gas spring having a spring force variable with temperature, comprising:
a) a first membrane;
b) a second membrane;
c) means for sealing edges of said first and second membranes to define a closed chamber therebetween; and
d) an amount of gas disposed within said chamber.

2. A gas spring in accordance with Claim 1 wherein said means for sealing includes direct sealing of said first membrane to said second membrane to form a gas-filled pillow.

3. A gas spring in accordance with Claim 1 wherein said means for sealing includes a rigid frame element disposed between said first and second membranes.

4. A gas spring in accordance with Claim 3 wherein said frame element has a trough-shaped cross section.

5. A gas spring in accordance with Claim 4 wherein said trough shape is concave radially outwards.

6. A gas spring in accordance with Claim 4 wherein said trough shape is concave radially inwards.

7. A gas spring in accordance with Claim 1, further including a mechanical spring.

8. A gas spring in accordance with claim 7, wherein at least one of said gas spring and said mechanical spring includes a stop element.

9. A gas spring in accordance with Claim 1, further including a mechanical spring disposed inside said chamber for applying a load against one of said first membrane and said second membrane.

10. A fuel cell assembly, comprising:
a) at least one fuel cell stack, said stack including a plurality of individual fuel cell modular elements;
b) a supporting structure surrounding said fuel cell stack; and
c) a gas spring disposed within said supporting structure for providing a compressive force against said fuel cell stack and said supporting structure.

11. A fuel cell assembly in accordance with Claim 10 wherein said gas spring includes at least one flexible membrane and at least one gas-filled chamber.

12. A fuel cell assembly in accordance with Claim 11 wherein said chamber is closed by said membrane.

13. A fuel cell assembly in accordance with Claim 11 wherein said membrane is formed as a corrugated member.

14. A fuel cell assembly in accordance with Claim 10 wherein at least one of said fuel cell modular elements is a solid-oxide fuel cell.

15. A fuel cell assembly in accordance with Claim 10 further comprising a manifold for supplying a gas to said plurality of individual fuel cell modular elements wherein said gas spring is disposed between said manifold and said at least one fuel cell stack.
